# EUROPEAN PATENT APPLICATION

(11) **EP 2 690 257 A2**
(43) Date of publication of application: **29.01.2014**
(21) Application number: 13177094.3
(22) Date of filing: 18.07.2013
(51) Int. Cl.: F01D 11/00

(54) **Fastener**

(30) Priority: 23.07.2012 GB 201213039
(71) Applicant: Rolls-Royce plc, London SW1E 6AT (GB)
(72) Inventor: Hillier, Steven, Manchester, M24 1HU (GB)
(74) Representative: Hartley, Andrew Colin

(57) **Abstract**

A fastener (33) is provided for connecting two or more structural elements having matching apertures (34, 35) which, when aligned, form a frusto-conical cavity. The fastener (33) includes a body portion (36) having a frusto-conical outer surface which is receivable in the aligned apertures of the structural elements such that the outer surface of the body portion is in mating engagement with the cavity formed by the aligned apertures. The fastener (33) further includes an elongate member (37) which extends from the body portion at the narrow end of the frustoconical outer surface. The fastener (33) further includes a fixing element (40) carried by the elongate member. The fixing element (40) is operable to exert a clamping force between the frusto-conical outer surface and the fixing element to retain the structural elements in connection therebetween. The fastener further includes a through-hole (41) which extends along the elongate member and which allows fluid communication between opposing sides of the connected structural elements.

A hollow sectioned seal sement (28) for a shroud ring (27) of a rotor of a gas turbine engine fixed to a backplate (29) with such a fastner (33).

## Description

### Field of the Invention

The present invention relates to a fastener for connecting two or more structural elements, and particularly, but not exclusively, for con necting two or more structural elements which experience differential thermal mismatch.

### Background of the Invention

The performance of gas turbine engines, whether measured in terms of efficiency or specific output, is improved by increasing the turbine gas temperature. It is therefore desirable to operate the turbines at the highest possible temperatures. For any engine cycle compression ratio or bypass ratio, increasing the turbine entry gas temperature produces more specific thrust (e.g. engine thrust per unit of air mass flow). However, as turbine entry temperatures increase, it is necessary to develop components and materials better able to withstand the increased temperatures.

This has led to the replacement of metallic shroud segments with ceramic matrix composite shroud segments having higher temperature capabilities. To accommodate the change in material, however, adaptations to the segments have been proposed. For example, EP 1965030 discloses a hollow section ceramic seal segment.

This has also led to the introduction of ceramic combustion chamber heat shield tiles.

A difficulty with such ceramic components is their typically lower thermal expansion coefficient relative to the metallic parts of the engine. Differential thermal mismatches can make fixing of the components to the engine problematic and can lead to unacceptable loadings on the segments.

Accordingly, EP 1965030 proposes attaching a ceramic seal segment to a metallic backing cassette or plate using a "daze" fastener of the type disclosed in US 4512699, i.e. a fastener having a body portion with a frusto-conical outer surface which engages in aligned matching apertures in the seal segment and the plate.

### Summary of the Invention

The present invention provides arrangements according to the appended claims.

In a first aspect, the present invention provides a fastener for connecting two or more structural elements having matching apertures which, when aligned, form a frusto-conical cavity, the fastener including:
a body portion having a frusto-conical outer surface which is receivable in the aligned apertures of the structural elements such that the outer surface of the body portion is in mating engagement with the cavity formed by the aligned apertures;
an elongate member which extends from the body portion at the narrow end of the frusto-conical outer surface; and
a fixing element carried by the elongate member, the fixing element being operable to exert a clamping force between the frusto-conical outer surface and the fixing element to retain the structural elements in connection therebetween;
wherein the fastener further includes a through-hole which extends along the elongate member and which allows fluid communication between opposing sides of the connected structural elements.

Thus, advantageously, as well as retaining the connected structural elements together, the functionality of a "daze" fastener can be extended to support fluid communication across the connected structural elements. In this way, separate arrangements for providing such fluid communication (such as, for example, additional aligned apertures in the structural elements) may not be needed, allowing the structural elements to be simplified, and, particularly in relation to ceramic elements, strengthened.

The fastener may further have an impingement plate arranged such that fluid exiting the through-hole at the body portion end of the elongate member impinges on the impingement plate. In this way the fluid can be deflected on exit from the through-hole, or, if the impingement plate structure contains apertures, formed into jets by the apertures.

The fastener may further be adapted to receive connections at either or both ends of the through-hole such that fluid flow can be directed, e.g. by appropriate pipework, away from or to the through-hole. For example, such pipework can help to distribute the fluid flow evenly around the structural elements, and/or can set up a rotational fluid flow.

The fastener may further comprise a duct which is sealably connected to the fastener so as to received and redistribute fluid exiting the through-hole.

The duct and impingement plate may be provided by a unitary homogenous structure.

In a second aspect, the present invention provides a hollow sectioned seal segment (e.g. formed of ceramic material, such as a ceramic matrix composite material, although a seal segment formed of metallic material can be used) for a shroud ring of a rotor of a gas turbine engine, in use, the seal segment being positioned radially adjacent the rotor, and being attached on its radially outer side to an inner side of a backing plate (e.g. formed of metallic material) of the shroud ring, a cooling air plenum being formed on the outer side of the backing plate;
wherein the seal segment has one or more outlets for a flow of cooling air from its hollow interior, the seal segment and the backing plate have matching apertures which, when aligned, form a frusto-conical cavity, and the seal segment has a fastener according to the first aspect for connecting the seal segment to the backing plate at the aligned apertures, whereby cooling air can flow through the fastener from the plenum into the hollow interior of the seal segment, and thence to the outlets.

The duct may be held within the hollow interior. The duct may comprise arcuate sections which are circumferentially joined to at least one corresponding adjacent arcuate section of duct.

The duct may comprise a plurality of cooling holes, a first group of holes directly opposing a portion of the seal segment which bounds a main gas path of the gas turbine engine and a second group which is remote to the first group such that air exit the second group undergoes preheating before impinging on a portion of the seal segment which bounds a main gas path of the gas turbine engine.

The duct may comprise projections in a space between the seal segment and the duct. The projections may act to maintain a minimum spacing between the seal segment and the duct, and may additionally or alternatively increase the turbulence in the cooling air to increase heat transfer from the wall of the seal segment. The projections may be pedestals or fins.

In a third aspect, the present invention provides a shroud ring of a rotor of a gas turbine engine, the shroud ring including an annular array of hollow sectioned seal segments according to the second aspect connected to the backing plate of the shroud ring.

The backing plate may include an annular, hollow, plenum-forming body at its radially outer side, the matching apertures opening to the hollow interior of the plenum-forming body.

In a fourth aspect, the present invention provides a heat shield tile (e.g. formed of ceramic material, such as a ceramic matrix composite material) for a combustion chamber of a gas turbine engine, in use, the tile being attached on its radially outer side to an inner side of a wall (e.g. formed of metallic material) of the combustion chamber, a plenum for combustion dilution air being formed on the outer side of the wall of the combustion chamber;
wherein the tile and the combustion chamber wall have aligned matching apertures which, when aligned, form a frusto-conical cavity, and the tile further has a fastener according to the first aspect for connecting the tile to the wall at the aligned apertures, whereby dilution air can flow through the fastener from the plenum into the combustion chamber.

In a fifth aspect, the present invention provides a combustion chamber of a gas turbine engine, the combustion chamber including a plurality of tiles according to fourth aspect connected to the inner side of the combustion chamber wall.

In a sixth aspect, the present invention provides a gas turbine engine having the shroud ring of the third aspect, and/or the combustion chamber of the fifth aspect.

In a seventh aspect, the present invention provides the use of a fastener according to the first aspect for connecting two or more structural elements having matching apertures which, when aligned, form a frusto-conical cavity, and for allowing fluid communication (e.g. a flow of cooling or dilution air) between opposing sides of the connected structural elements.

In such use, a spacer may be located at any one or two or more of the following locations: between the structural elements, between one of the structural elements and the fixing element, and between one of the structural elements and the outer surface of the body portion. The spacer or spacers may be formed of metal or ceramic (such as a ceramic matrix composite).

Optional features of the invention will now be set out. These are applicable singly or in any combination with any aspect of the invention.

Typically, the connected structural elements have different coefficients of thermal expansion. On of the structural elements can be formed of a ceramic material, and another can be formed of a metallic material.

The fastener may further include one or more spacers which are disposed on the elongate member to space the fixing element from the connected structural elements. For example, the fastener may further include a spacer washer and adjacent the connected structural elements and a metal washer sandwiched between the spacer washer and the fixing element.

The elongate member may be externally threaded, and the fixing element can then be a bolt which threads onto the elongate member to exert the clamping force. However, another option is for the fixing element to be a rivet head at the end of the elongate member, the rivet head being deformable to exert the clamping force.

Further optional features of the invention are set out below.

### Brief Description of the Drawings

Embodiments of the invention will now be described by way of example with reference to the accompanying drawings in which:
Figure 1 shows a longitudinal sectional elevation through a ducted fan gas turbine engine;
Figure 2 shows schematically a sectional elevation through a shroud ring of the high pressure turbine of the engine of Figure 1; and
Figure 3 shows schematically a more detailed view of the shroud ring of Figure 2.
Figure 4 shows a further embodiment of the invention which is similar to that shown in Figure 3.

### Detailed Description and Further Optional Features of the Invention

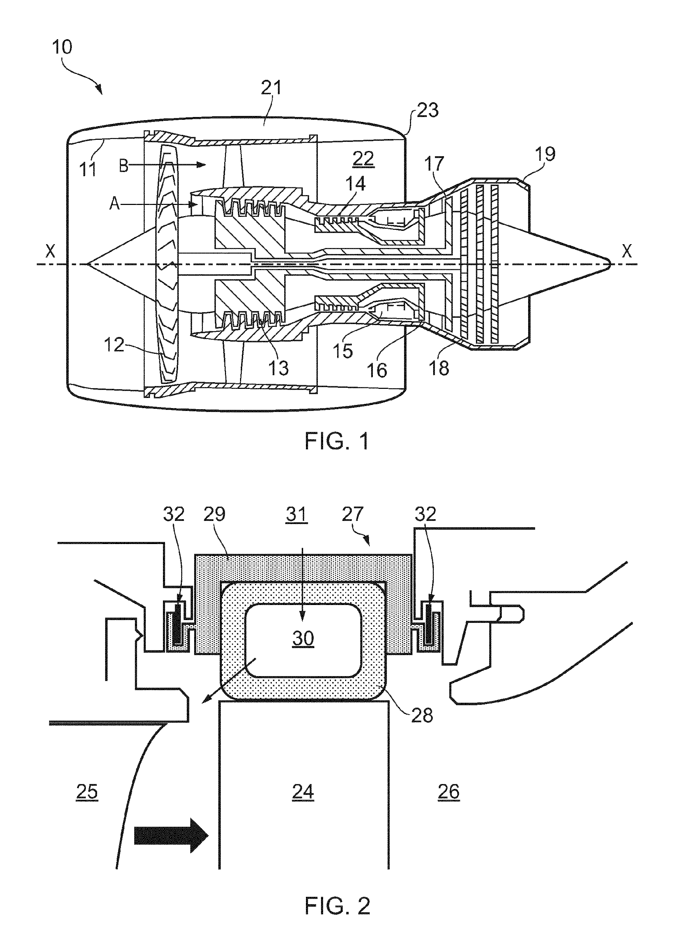

With reference to Figure 1, a ducted fan gas turbine engine generally indicated at 10 has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, and intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

The gas turbine engine 10 works in a conventional manner so that air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

The high pressure turbine 16 includes an annular array of radially extending rotor aerofoil blades 24, the radially outer part of one of which can be seen if reference is now made to Figure 2, which shows schematically a sectional elevation through a portion of the high pressure turbine. Hot turbine gases flow over nozzle guide vanes 25 and the aerofoil blades 24 in the direction generally indicated by the large arrow. A shroud ring 27 in accordance with the present invention is positioned radially outwardly of the shroudless aerofoil blades 24. The shroud ring 27 serves to define the radially outer extent of a short length of the gas passage 26 through the high pressure turbine 16.

The turbine gases flowing over the radially inward facing surface of the shroud ring 27 are at extremely high temperatures. Consequently, at least that portion of the ring 27 must be constructed from a material which is capable of withstanding those temperatures whilst maintaining its structural integrity. Ceramic materials are particularly well suited to this sort of application.

The shroud ring 27 is formed from an annular array of hollow sectioned seal segments 28 attached between radially inwardly projecting, front and rear flanges of an annular, metallic backing plate 29. As indicated by the small arrows (and as discussed in more detail below), cooling air for the ring 27 enters the hollow interiors 30 of the seal segments 28 from a plenum 31 on the other side of the backing plate 29, the air being continuously replenished as it leaks, under a pressure gradient, into the working gas annulus. The backing plate 29 is sealed at its front and rear sides to adjacent parts of the engine casing by piston ring-type sealing formations 32 of conventional design.

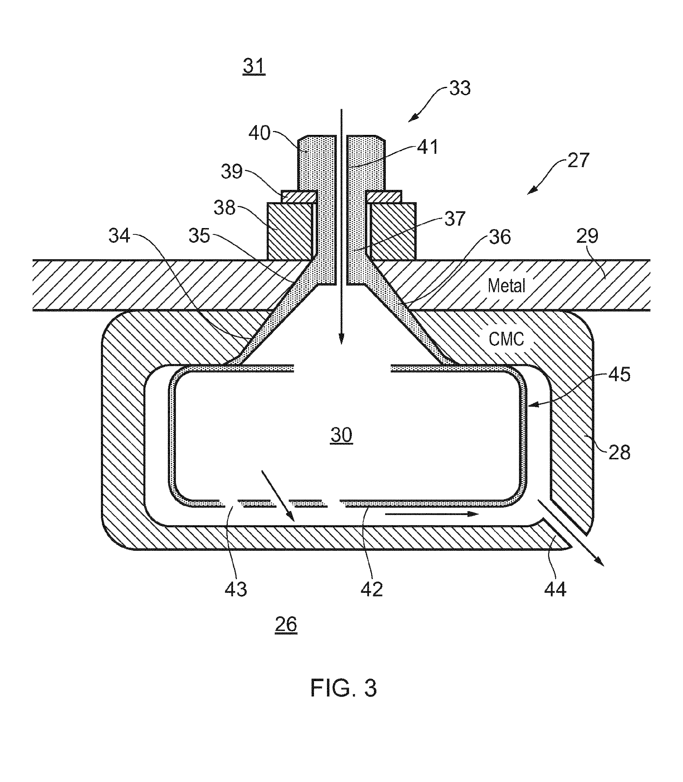

Figure 3 shows schematically a more detailed view of the shroud ring 27 of Figure 2. Each seal segment 28 is formed of ceramic matrix composite and thus has a lower coefficient of thermal expansion than the metallic backing plate 29 to which it is attached. To accommodate the differential thermal mismatch between the segment 28 and the backing plate 29, the connection between these two elements is made by a fastener 33 of the "daze" type, but modified to also allow the cooling air for the segment 28 to flow through the fastener 33 from the plenum 31. It will be appreciated that the arrangement will likely include a plurality of similar fasteners 33 around the circumference of the shroud ring 27.

The seal segment 28 and the backing plate 29 have respective aligned apertures 34, 35 which together form a frusto-conical cavity. The fastener 33 has a body portion 36 with a frusto-conical outer surface which fits into the cavity. An elongate threaded member 37 extends from the narrow end of the body portion 36, and projects from the outer surface of the backing plate 29. A spacer 38, a washer 39 and a bolt 40 are carried on the projecting part of the threaded member 37, the bolt screwing onto the threaded member 37 to exert a clamping force between the body portion 36 and the bolt 40 which retains the seal segment 28 and the backing plate 29 in connection.

Advantageously, the clamping load is consistent despite the thermal mismatch between the seal segment 28 and the backing plate 29, which can help to avoid leakage along the interface between the segment 28 and the backing plate 29. Also, as the fastener 33 contacts the seal segment 28 over a relatively large area due to the widening of the body portion 36, contact damage to the ceramic matrix composite of the segment 28 can be avoided.

The fastener 33 also has a through hole 41 which extends the length of the elongate member 37 to open at one end to the plenum 31 and at the other end to the interior 30 of the seal segment 28. Cooling air thus flows from the plenum 31 into the segment 28 via the through hole 41. An impingement plate structure 42 within the segment 28 has an array of holes 43 through which the cooling air passes in the form of impingement jets directed onto the radially inner wall of the segment 28. In this way, the segment 28 is cooled by the relatively high velocity jets at the location where the segment experiences the highest temperatures. The cooling air finally exhausts into the gas passage 26 via exit holes 44 in the segment 28. Particularly in the case of ceramic matrix composite materials, however, impingement jet cooling may induce thermal gradients, and hence stress concentrations, which are too high and may cause damage. Thus, the cooling air is deflected into a duct 45 parallel to the radially inner wall of the segment 28 to provide more uniform cooling (e.g. via a film or transpiration cooling approach, transpiration cooling being an even "bleeding" of cooling air through a working surface).

In the described embodiment, the duct 45 is sealably attached to the fastener 33 and provides a continuous annular structure around the circumference of the turbine. In this way, air passing through the fastener(s) 33 is substantially contained within the duct 45 and distributed around the engine to the impingement holes 43 where it is required. The sealable attachment may be achieved by a compression fit achieved between two opposing surfaces when the fastener 33 is tightened or by an integral join such as a weld which provides a homogenous structure. The duct 45 can be supported solely by the connection with the fastener 33 and may be separated from the wall of the seal segment 28 to allow for differential thermal expansion of the two components. The impingement plate 42 and duct 45 are shown as being constructed as a single bodied component from, for example, a sheet material although it will be appreciated that the construction may be provided in different ways. Circumferentially, the duct 45 is constructed from arcuate segments which are connected to one another during the engine assembly. The connections between arcuate segments are preferably sealed to prevent parasitic loss of air. In one embodiment the seal between the ducts may be provided by respective female-male portions. The joining portions may be formed as integral parts of the duct 45. This is particularly so when the duct 45 is made from a sheet material with one end being either flared or reduced to mateably accommodate an adjacent end of another similar section.

Advantageously, the fastener 33, by combining the roles of structural element connection and cooling air delivery, allows separate arrangements for providing cooling air to the seal segment 28 (such as, for example, additional aligned apertures in the backing plate 29 and segment 28) to be avoided.

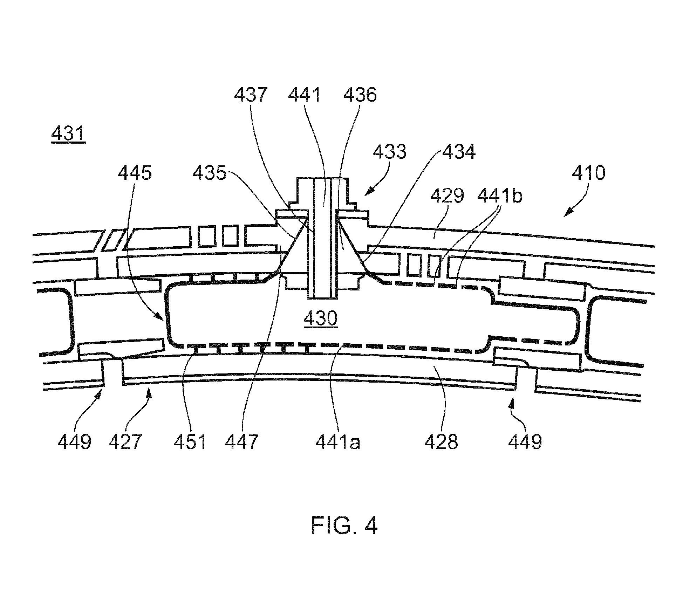

Figure 4 shows a cross-sectional view of a shroud ring 410 normal to the rotational axis X-X of the gas turbine engine. The shroud ring 427 is formed from an annular array of hollow sectioned seal segments 428. Each seal segment 428 is formed of ceramic matrix composite which is connected to the backing plate 429 by a fastener 433 of the "daze" type, but modified to also allow the cooling air for the segment 428 to flow through the fastener 433 from the air supply plenum 431.

The seal segment 428 and the backing plate 429 have respective aligned apertures 434, 435 which together form a frusto-conical cavity. The fastener 433 has a body portion 436 with a frusto-conical outer surface which fits into the cavity. The body portion 436 has a through-hole 441 which receives an elongate threaded member 437 in the form of a bolt. The distal end of the bolt threadingly engages with a corresponding portion of a duct 445 such that tightening the two urges the body portion into the frusto-conical cavity exerts a clamping force between the body portion 436 and the bolt 440 which retains the seal segment 428 and the backing plate 429 in connection.to provide the daze fastener.

The fastener 433 has a through hole 441 which extends the length of the elongate member 437 to open at one end to the plenum 431 and at the other end to the interior 430 of the seal segment 428. Cooling air thus flows from the plenum 431 into the segment 428 via the through hole 441. The threaded portion of the duct 445 includes a flat face which sealably engages with the corresponding radially inner surface of the body portion under the clamping force exerted by the threaded engagement. Thus, the air entering the duct 445 via the through-hole 441 of the fastener 433 is captured by the duct 445 for redistributing around the seal segment 428.

The duct 445 may be constructed from any suitable material such as CMX9 a Ni based superalloy but will preferably be a sheet metal which can be shaped and have impingement cooling holes 441 drilled therein using known techniques.

Cooling holes 441a,b can be presented directly radially outwards of the seal segment 428 so as to impinge air thereon, or be placed at a remote to the portion of the seal segment 428 which borders the hot gas path such that the air can be preheated before passing over the seal segment 428. In this way, the cooling air can be heated prior to contacting the seal segment 428 thereby reducing the differential thermal gradient and the associated thermal stress. In the embodiment shown in Figure 4, the cooling holes 441a,b are provided directly opposite the radially inner wall of the seal segment and the radially outer wall of the duct so as to impinge on the backing plate 429 which provides the pre-heat. It will be appreciated that the size and distribution of the holes within the duct 445 will be application specific.

The seal segment 428 is held radially inwards of the backing plate 429 and clamped between the fastener 433 and a spacer 447 in the form of a boss which projects radially inwards from the backing plate 429. The boss carries the frusto-conical portion of the backing plate 429. It will be appreciated that the structural support of the seal segment 428 is supplemented by the engagement with circumferentially adjacent seal segments.

The spacer 447 provides a radial separation between the opposing surfaces of the backing plate 429 and seal segment 428 such that differential movement of the components, for example flattening, can be accommodated during use.

Adjacent seal segments 428 engage one another via coupling portions 449 which in the described embodiment are of the male and female type in which a narrower portion of the one seal segment 428 slots into a correspondingly broader end of an adjacent segment.

In more detail, the male portions are provided by discrete segments of CMC material which are integrally joined together via a suitable braze or the like. Alternatively, the male coupling portion can be provided by a separate segment which is interference fitted, or by appropriately shaping the segment when fabricating it from the layers of CMC material to provide a homogenous unitary seal segment with an integral joining portion.

The corresponding female portion may include a machined interface in which a portion of the face of the seal segment is removed improve the tolerance of the joint. The coupling portions may additionally include passageways in the form of scallops which provide a gas path through which cooling air can exit the seal segment into the main gas path.

Additional cooling can be provided by appropriately located apertures within the backing plate 429 and seal segment 428.

A further advantageous feature of the arrangement is the presence of projections 451 on the outer surface of the duct wall. The projections 451 can be used to increase the turbulence of the air which flows between the duct 445 and the seal segment 428, and or, to maintain the separation between the seal segment 427 and the duct 445. The projections 451 may be placed anywhere on the duct 445 as required. In the described embodiment, they are shown on the radially inner and outer walls thereof. The projections 451 may be any suitable type as known in the art including pedestals or fins etc.

It will be appreciated that the cooling holes 441a,b and projections 451are shown on certain areas of the duct 445 only. This is for illustration purposes only and it is likely that such features would be more uniformly distributed in reality. Hence, a practical arrangement would include projections on the right and left sides (as shown in Figure 4) of the duct, rather than just being on the left.

The radial of the duct 445 is substantially constant around the circumference with the exception of the narrow portion which is provided by the coupling between the adjacent seal segments 427 in which the duct reduces by a corresponding amount. Cooling holes 441are also provided within the coupling portion to provide cooling air to the join.

While the invention has been described in conjunction with the exemplary embodiments described above, many equivalent modifications and variations will be apparent to those skilled in the art when given this disclosure. For example, although described above in relation to a shroud ring, the fastener of the present invention can be used in other applications, particularly where it is necessary to accommodate thermal mismatch between connected structural elements and also allow fluid communication between opposing sides of the elements. One such application is connecting a ceramic heat shield tile to the metallic wall of a gas turbine engine combustion chamber, the fastener allowing dilution air to pass into the chamber through the wall and tile. Accordingly, the exemplary embodiments of the invention set forth above are considered to be illustrative and not limiting. Various changes to the described embodiments may be made without departing from the spirit and scope of the invention.

All references referred to above are hereby incorporated by reference.

## Claims

1. A fastener (33) for connecting two or more structural elements having matching apertures (34, 35) which, when aligned, form a frusto-conical cavity, the fastener including:
a body portion (36) having a frusto-conical outer surface which is receivable in the aligned apertures of the structural elements such that the outer surface of the body portion is in mating engagement with the cavity formed by the aligned apertures;
an elongate member (37) which extends from the body portion at the narrow end of the frusto-conical outer surface; and
a fixing element (40) carried by the elongate member, the fixing element being operable to exert a clamping force between the frusto-conical outer surface and the fixing element to retain the structural elements in connection therebetween;
wherein the fastener further includes a through-hole (41) which extends along the elongate member and which allows fluid communication between opposing sides of the connected structural elements.

2. A fastener according to claim 1 further having an impingement plate (42) arranged such that fluid exiting the through-hole at the body portion end of the elongate member impinges on the impingement plate.

3. A fastener as claimed in claim 2, further comprising a duct (45) which is sealably connected to the fastener so as to received and redistribute fluid exiting the through-hole.

4. A fastener as claimed in claim 3, wherein the duct (45) and impingement plate (42) are provided by a unitary homogenous structure.

5. A hollow sectioned seal segment (28) for a shroud ring (27) of a rotor of a gas turbine engine, in use, the seal segment being positioned radially adjacent the rotor, and being attached on its radially outer side to an inner side of a backing plate (29) of the shroud ring, a cooling air plenum (31) being formed on the outer side of the backing plate;
wherein the seal segment has one or more outlets (44) for a flow of cooling air from its hollow interior (30), the seal segment and the backing plate have matching apertures which, when aligned, form a frusto-conical cavity, and the seal segment has a fastener according to any preceding claim for connecting the seal segment to the backing plate at the aligned apertures, whereby cooling air can flow through the fastener from the plenum into the hollow interior of the seal segment, and thence to the outlets.

6. A hollow sectioned seal segment according to claim 5 when dependent on claim 3, wherein the duct is held within the hollow interior (30).

7. A hollow sectioned seal segment according to claim 6, wherein the duct comprises arcuate sections which are circumferentially joined to at least one corresponding adjacent arcuate section of duct (45).

8. A hollow sectioned seal segment according to either of claims 6 or 7 wherein the duct comprises a plurality of cooling holes, a first group of holes directly opposing a portion of the seal segment which bounds a main gas path of the gas turbine engine and a second group which is remote to the first group such that air exit the second group undergoes preheating before impinging on a portion of the seal segment which bounds a main gas path of the gas turbine engine.

9. A hollow sectioned seal segment according to any of claims 5 to 8, wherein the duct comprises projections in a space between the seal segment and the duct.

10. A hollow sectioned seal segment according to any of claims 5 to 9, wherein the seal segment is formed of a ceramic material.

11. A hollow sectioned seal segment according to claim 10, wherein the seal segment is formed of a ceramic matrix composite material.

12. A shroud ring of a rotor of a gas turbine engine, the shroud ring including an annular array of hollow sectioned seal segments according to any one of claims 5 to 11 connected to the backing plate of the shroud ring.

13. A shroud ring according to claim 12, wherein the backing plate is metallic.

14. The use of a fastener according to any of claims 1 to 3 for connecting two or more structural elements having matching apertures which, when aligned, form a frusto-conical cavity, and for allowing fluid communication between opposing sides of the connected structural elements.
